(19) Europäisches Patentamt
European Patent Office
Office européen des brevets

(11) Veröffentlichungsnummer: **0 001 088 A1**

(12) **EUROPÄISCHE PATENTANMELDUNG**

(21) Anmeldenummer: 78100781.0

(22) Anmeldetag: 30.08.78

(51) Int. Cl.²: C 08 F 20/28

(30) Priorität: 06.09.77 DE 2739662

(43) Veröffentlichungstag der Anmeldung: 21.03.79 Patentblatt 79/6

(84) Benannte Vertragsstaaten: BE DE FR GB NL

(71) Anmelder: BASF Aktiengesellschaft
Carl-Bosch-Strasse 38
D-6700 Ludwigshafen(DE)

(72) Erfinder: Schneider, Kurt, Dr.
Auf dem Koeppel
D-6702 Bad Duerkheim 1(DE)

(72) Erfinder: Naarmann, Herbert, Dr.
Haardtblick 15
D-6719 Wattenheim(DE)

(54) **Carbonatgruppen enthaltende Polymerisate.**

(57) Die Erfindung betrifft neue Polymerisate, welche in der Seitenkette 1,3-Dioxolan-2- on-Gruppen enthalten. Die Polymerisate werden erhalten durch Polymerisation der entsprechend ungesättigten Verbindung

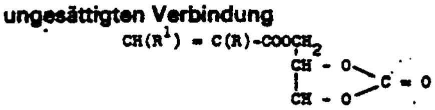

Die erfindungsgemäßen Polymerisate sind aufgrund der Carbonatgruppe in der Seitenkette sehr reaktiv und gegebenenfalls chemischen Umsätzen zugänglich. Die Polymerisate können werwendet werden zur Herstellung von Formkörpern oder Formmassen, Überzügen, Klebemitteln, Papierund Textilhilfsmitteln.

EP 0 001 088 A1

Carbonatgruppen enthaltende Polymerisate

Die Erfindung betrifft neue Polymerisate und ein Verfahren zur Herstellung derartiger Polymerisate.

Der Erfindung lag die Aufgabe zugrunde, Polymerisate herzustellen, die in den Seitenketten funktionelle Carbonatgruppen aufweisen und darüber hinaus für zusätzliche Modifizierungen noch andere reaktionsfähige Gruppen enthalten können.

Diese Aufgabe wird gelöst durch Polymerisate mit K-Werten von 20 bis 140, die Strukturelemente der allgemeinen Formel

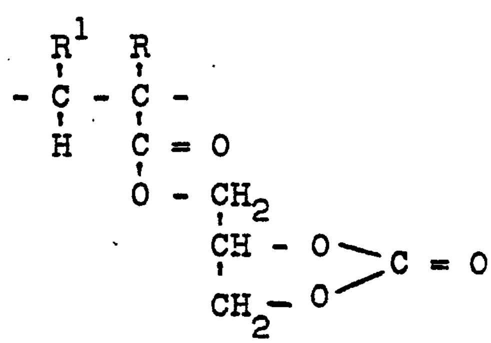

enthalten, worin R = H oder $CH_3$ und $R^1$ = H oder COOH sein können.

Fre/Fe

Bei derartigen Polymerisaten handelt es sich um makromolekulare Stoffe, deren Seitenzweige die carbonatgruppenhaltige 1,3-Dioxolan-2-on-Gruppen aufweisen.

Eine weitere Aufgabe ist die Herstellung derartiger Polymerisate.

Diese Aufgabe wird dadurch gelöst, daß man olefinisch ungesättigte Carbonsäureester der allgemeinen Formel

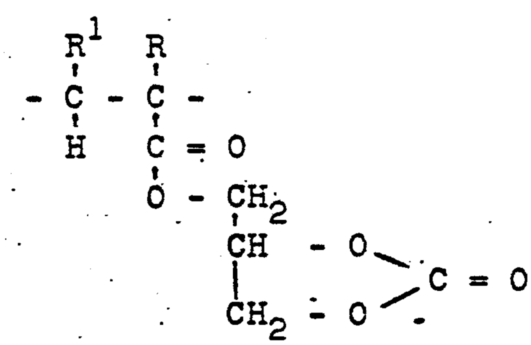

worin R = H oder $CH_3$ und $R^1$ = H oder COOH sein können, gegebenenfalls mit einem oder mehreren anderen olefinisch ungesättigten Monomeren, die mit den Carbonsäureestern copolymerisierbar sind, in Gegenwart von Radikale bildenden Initiatoren polymerisiert.

Unter Polymerisaten mit K-Werten von 20 bis 140, bevorzugt 50 bis 90, welche Strukturelemente der eingangs definierten Formel enthalten, werden makromolekulare Stoffe verstanden, die ganz oder im wesentlichen oder teilweise aus wiederkehrenden Einheiten der Formel

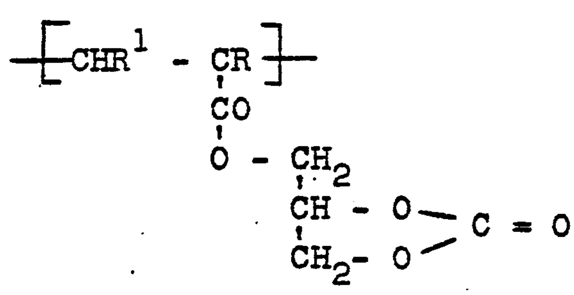

bestehen, worin der Formelteil $-CHR^1-CR-$ ein Teil der Polymerisatkette ist. Die allgemeine Formel beschreibt also Homopolymerisate, die nur die oben angegebenen Strukturelemente einpolymerisiert enthalten, als auch Copolymerisate mit einem oder mehreren anderen olefinisch ungesättigten Monomeren, die mit dem oben bezeichneten, olefinisch ungesättigten Carbonsäureester copolymerisierbar sind. Unter K-Wert wird dabei die technische Kenngröße verstanden, die zur Charakterisierung des Polymerisationsgrades eines Polymerisates üblich ist. Die K-Werte der erfindungsgemäßen Polymerisate wurden nach H. Fikentscher, Cellulosechemie 13 (1932) 58 - 64 und 71 - 74, jeweils 1-gewichtsprozentig in Dimethylformamid bei einer Temperatur von 25°C gemessen; dabei bedeutet $K = k \cdot 10^3$.

Die als Monomere bevorzugt in Betracht kommenden olefinisch ungesättigten Carbonsäureester sind die Verbindungen I, II und III

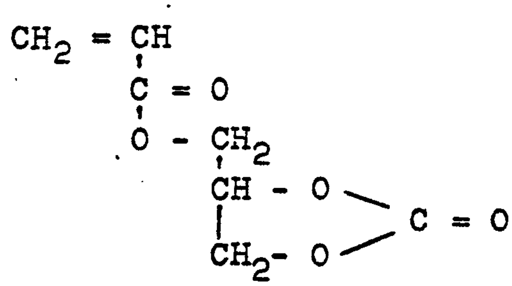

I

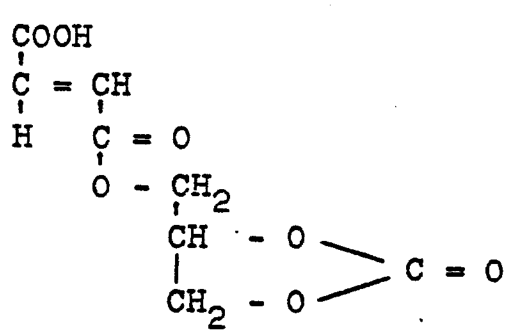

II

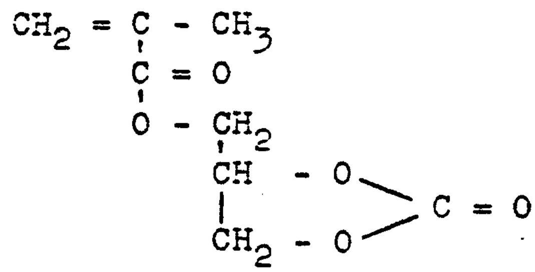 III

Diese Verbindungen können hergestellt werden aus entsprechenden olefinisch ungesättigten Carbonsäurederivaten durch Umsetzung mit Glycerincarbonat. Diese Reaktion ist an sich bekannt und beispielsweise in der DE-PS 845 937 oder in der US-PS 2 856 413 beschrieben. Als olefinisch ungesättigte Carbonsäureester seien genannt die Monoester der Acrylsäure, Methacrylsäure und der Fumarsäure.

Die Monomeren der Formel I, II oder III können jeweils für sich alleine homopolymerisiert werden. Selbstverständlich ist es auch möglich, Gemische der Verbindungen I, II und III zu copolymerisieren. Außerdem sind die Verbindungen I, II und/oder III der Copolymerisation mit anderen copolymerisierbaren olefinisch ungesättigten Monomeren zugänglich.

Geeignete olefinisch ungesättigte Monomere, die gegebenenfalls mit den genannten carbonatgruppenhaltigen Monomeren copolymerisiert werden können, sind beispielsweise Olefine, wie Äthylen, Propylen, Butadien, Isopren; Styrol und substituierte Styrole, wie α-Methylstyrol, p-Chlorstyrol und p-Methylstyrol; Acrylsäureester und Methacrylsäureester, insbesondere solche mit 1 bis 18, vorzugsweise 1 bis 8 Kohlenstoffatomen im Alkoholrest, beispielsweise Acryl- oder Methacrylsäureester des Methanols, Äthanols, Butanols oder Äthylcyclohexanols; Monoester des Äthylenglykols, Propylenglykols-1,2 oder -1,3, Butenylglykols, Butylenglykols-1,4,

Acryl- und Methacrylsäureamid und substituierte Amide, wie N-Methylolacrylamid oder deren Äther, wie N-Methylol-acrylamidbutyläther, N-Methylolmethacrylamidmethyläther; Acryl- und Methacrylnitril; Vinylester wie Vinylacetat, Vinylpropionat; Vinyläther, wie Methyl-, Äthyl- oder Alkylvinyläther mit Alkylresten mit 3 bis 6 Kohlenstoffatomen, ferner Fumar-, Malein- oder Itaconsäure, Ester dieser Säuren und Maleinsäureanhydrid. Von den vorstehend genannten Verbindungen können auch gleichzeitig zwei oder mehr mit den genannten carbonatgruppenhaltigen Monomeren copolymerisiert werden.

Für die Herstellung von Copolymerisaten kann der Anteil an olefinisch ungesättigten Carbonaten im Monomerengemisch in weiten Grenzen schwanken, beispielsweise zwischen 1 und 99, insbesondere zwischen 5 und 80, vorzugsweise zwischen 8 und 60 Gewichtsprozent, bezogen auf das Gesamtgewicht der Monomeren.

Zur Auslösung der Polymerisation werden übliche Radikale bildende Initiatoren verwendet. Geeignete Initiatoren sind beispielsweise Wasserstoffperoxid, organische Hydroperoxide und Peroxide, wie Caproylperoxid, Lauroylperoxid, t-Butylperbenzoat, Dicumylperoxid, p-Methanhydroperoxid, Cumolhydroperoxid,Bernsteinsäureperoxid, ferner unter Polymerisationsbedingungen in Radikale zerfallende aliphatische Azoverbindungen, wie 2,2'-Azo-bis-2,4-dimethylvaleronitril, 2,2'-Azo-bis-isobutyronitril und analoge Azonitrile, die beispielsweise in J. Hine "Reaktivität und Mechanismus in der organischen Chemie", Verlag Georg Thieme, Stuttgart (1960), Seite 412, aufgeführt sind, sowie übliche Redoxkatalysatorsysteme, wie die Systeme Kalium- oder Ammoniumpersulfat und Ascorbinsäure, Natriumhydrosulfit oder Eisen-II-salze.

Geeignet sind ferner die als Radikalbildner bekannten Chelate von Übergangsmetallen, insbesondere solche, in denen das Metall in einer ungewöhnlichen Wertigkeit vorliegt, wie Chelate des Mangan(III), Kobalt(III), Kupfer(II) und Cer(IV). Im allgemeinen werden als Chelatbildner 1,3-Dicarbonylverbindungen verwendet. Als Beispiele seien genannt Mangan(III)-acetylacetonat und Kobalt(III)-acetessigester. Außerdem kann die Polymerisation auch durch Strahlung, gegebenenfalls in Gegenwart von Sensibilisatoren, wie Benzoinderivaten, ausgelöst werden.

Die Initiatoren werden im allgemeinen in einer Menge von 0,05 bis 5 Gewichtsprozent, vorzugsweise 0,1 bis 1,0 Gewichtsprozent, bezogen auf die Monomerenmenge, verwendet. Die optimale Menge und der optimal wirksame Initiator lassen sich durch Versuche leicht ermitteln.

Die Polymerisation kann in Substanz durchgeführt werden. Vorteilhaft arbeitet man jedoch in Gegenwart von Lösungs- oder Verdünnungsmitteln. Geeignet sind beispielsweise Ketone, wie Methyläthyl- oder Methylpropylketon, Äther wie Diäthyläther, Tetrahydrofuran oder Dioxan; aliphatische, cycloaliphatische oder aromatische Kohlenwasserstoffe, wie Hexan, Heptan, Cyclohexan, Benzol oder Toluol, gut geeignet ist auch Dimethylformamid.

Die für eine Vielfalt anderer Monomerer oder Monomerengemische üblichen Suspensions- oder Lösungspolymerisationsverfahren sind auch für das neue Verfahren geeignet. Auch bezüglich der gegebenenfalls verwendeten Hilfsmittel, wie Dispergiermittel, Schutzkolloide und dergleichen unterscheidet sich das neue Verfahren nicht von bekannten.

Die Polymerisation kann in einem weiten Temperaturbereich, etwa zwischen 0 und 150°C, vorzugsweise zwischen 50 und 120°C, bei Reaktionszeiten von 1 bis 20 Stunden, vorzugsweise 2 bis 10 Stunden, durchgeführt werden. Man arbeitet im allgemeinen bei Atmosphärendruck, doch können auch höhere Drucke angewandt werden. Insbesondere bei Copolymerisationen mit niedrigsiedenden Comonomeren ist die Verwendung von höheren Drucken angezeigt, um eine ausreichende Konzentration des Comonomeren im Reaktionsgemisch zu bewirken.

Die Copolymerisation der olefinisch ungesättigten Carbonsäureester I, II und III mit Äthylen oder Butadien wird vorteilhaft in Aliphaten oder Aromaten durchgeführt, indem man die miteinander copolymerisierbaren Monomeren in das Lösungsmittel, das einen Initiator enthält, einbringt und bei erhöhtem Druck, bei Äthylen als Comonomeren, bis etwa 2 000 atü polymerisiert.

Die Copolymerisation mit Acrylsäureestern wird zweckmäßig in aromatischen oder aliphatischen Kohlenwasserstoffen unter den für die Polymerisation von Acrylsäureestern bekannten Bedingungen durchgeführt.

Die erfindungsgemäßen Polymerisate sind aufgrund der Carbonatgruppe in der Seitenkette reaktiv und gegebenenfalls weiteren Reaktionen zugänglich. Die Polymerisate können beispielsweise intermolekular und intramolekular vernetzt, pfropfpolymerisiert oder vulkanisiert werden. Ferner ist es möglich, die Carbonatgruppen in Epoxidgruppen überzuführen.

Die Polymerisate werden beispielsweise für die Herstellung von Formkörpern, schlagfesten Massen, Überzügen oder Klebemitteln, auch im Gemisch mit anderen Kunststoffen, z.B. mit Polyäthylen, Polypropylen oder mit Mischpolymerisaten

aus Vinylacetat und Äthylen, verwendet. Wegen ihrer oberflächenaktiven Eigenschaften sind die Polymerisate unter anderem auch zum Veredeln von Papier und Textilien geeignet. Sie sind ferner leicht anfärbbar.

Da die carbonatgruppenhaltigen Polymerisate durch thermische Spaltung in epoxidgruppenhaltige Polymerisate übergeführt werden können, kann man die Produkte als verkappte Polyepoxide verwenden.

Von besonderem technischen Interesse sind ferner Copolymerisate der olefinisch ungesättigten Carbonate mit Acrylsäureestern. Diese Produkte sind löslich, hochmolekular, mit Pigmenten mischbar und lassen sich mit üblichen Vernetzungsmitteln bei verhältnismäßig niederen Temperaturen vernetzen. Solche Copolymerisate sind vorzüglich als Lacke verwendbar.

Die in den Beispielen genannten Teile und Prozente beziehen sich auf das Gewicht.

Beispiel 1

Acrylsäureäthylester und Verbindung I werden in bestimmten Mengenverhältnissen gemischt, mit jeweils 0,1 Gewichtsprozent Azo-bis-iso-buttersäurenitril versetzt und 2 Stunden auf 70°C erwärmt.

Die erhaltenen Copolymerisate werden mit Methanol gefällt, mit Methanol gewaschen und im Vakuumtrockenschrank 10 Stunden bei 60°C und 12 mm Hg getrocknet. Die Ergebnisse sind in der folgenden Tabelle zusammengestellt.

| Nr. | Acrylsäure-äthylester Teile | Verbindung I Teile | Umsatz Gew.% | K-Wert | Anteil der Verbindung I im Copolymerisat in Gew.% |
|---|---|---|---|---|---|
| a | 9,9 | 0,1 | 100 | 84 | ca. 0,9 |
| b | 9,5 | 0,5 | 100 | 85 | 4,95 |
| c | 9,0 | 1,0 | 98 | 83 | 9,6 |
| d | 8,5 | 1,5 | 96 | 74,5 | 14,8 |
| e | 8,0 | 2,0 | 95 | 76 | 19,5 |
| f | 7,0 | 3,0 | 96 | 84,5 | 29,5 |
| g | 6,0 | 4,0 | 75 | 89 | 39,5 |
| h | 5,0 | 5,0 | 98 | 82,5 | 49,5 |
| i | 4,0 | 6,0 | 91 | 89,5 | 59,5 |
| j | 2,5 | 7,5 | 93 | 86 | 74,5 |
| k | 1,0 | 9,0 | 95 | 86 | 99 |

Beispiel 2

Eine Lösung aus 50 Teilen Toluol, 50 Teilen eines Mischpolymerisates aus Acrylsäureäthylester und Verbindung I, hergestellt analog den Angaben von Beispiel 1c und 1 Teil p-Phenylendiamin wird auf ein Blech aufgetragen und 30 Minuten bei 100°C vernetzt. Der entstandene Lacküberzug ist klar und in Aceton oder Toluol unlöslich.

Beispiel 3

5 Teile Acrylnitril und 5 Teile Verbindung II werden in Gegenwart von 0,1 Teilen Azo-bis-isobuttersäurenitril 2 Stunden bei 70°C polymerisiert. Das Polymerisat besitzt einen K-Wert von 76 und enthält 48 Gewichtsprozent an einpolymerisierter Verbindung II. Der Umsatz liegt bei ca. 95 Prozent.

Beispiel 4

Auf eine Lösung von 150 Teilen Toluol, 10 Teilen Verbindung III und 1 Teil Azo-bis-isobutyronitril wird unter Rühren 8 Stunden bei 90°C so viel Butadien aufgepreßt, daß der Butadiendruck im Gasraum 6 atü beträgt. Das Polymerisat besitzt nach dieser Reaktionszeit einen Festgehalt von 27 Gewichtsprozent, einen K-Wert von 84 und enthält 15,0 Gewichtsprozent der Verbindung III einpolymerisiert.

Beispiel 5

Wird analog der Angaben des Beispiels 4 gearbeitet, jedoch das Butadien durch Äthylen ersetzt, so erhält man bei einer Reaktionszeit von 8 Stunden, einer Reaktionstemperatur von 90°C und einem Äthylendruck im Gasraum von 235 atü eine Lösung mit einem Festgehalt von 20 Gewichtsprozent. Der K-Wert des Copolymerisats, das einen Anteil von ca. 13 Gewichtsprozent Verbindung III einpolymerisiert enthält, beträgt 63 (1-prozentig in Dekhydronaphthalin).

BAD ORIGINAL

Patentansprüche

1. Polymerisate mit K-Werten von 20 bis 140, die Strukturelemente der allgemeinen Formel

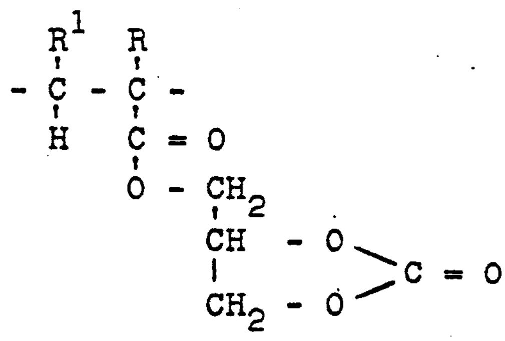

enthalten, worin R = H oder $CH_3$ und $R^1$ = H oder COOH sein können.

2. Verfahren zur Herstellung von 1,3-Dioxolan-2-on-Gruppen enthaltenden Polymerisaten mit K-Werten von 20 bis 140, dadurch gekennzeichnet, daß man olefinisch ungesättigte Carbonsäureester der allgemeinen Formel

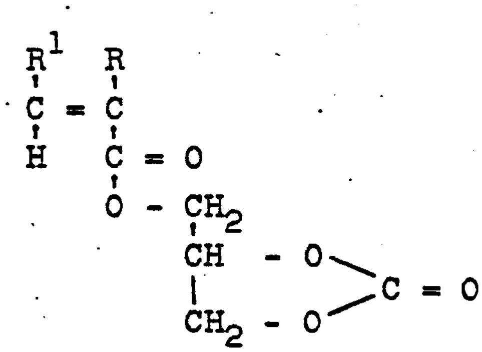

,

worin R = H oder $CH_3$ und $R^1$ = H oder COOH sein können, gegebenenfalls mit einem oder mehreren anderen olefinisch ungesättigten Monomeren, die mit den Carbonsäureestern copolymerisierbar sind, in Gegenwart von Radikale bildenden Initiatoren polymerisiert.

Europäisches Patentamt

0001088

**EUROPÄISCHER RECHERCHENBERICHT**

Nummer der Anmeldung
EP 78 10 0781

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | FR - A - 1 207 790 (ROHM & HAAS CO)<br>* Ansprüche A,C,D * | 1,2 | C 08 F 20/28 |
| X | US - A - 2 967 173 (J.C. FANG)<br>* Ansprüche 1,7,13 * | 1,2 | |

RECHERCHIERTE SACHGEBIETE (Int. Cl.²)

C 08 F 20/28
120/28
220/28

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-12-1978 | CAUWENBERG |